# EUROPEAN PATENT APPLICATION

(11) **EP 2 942 219 A1**
(43) Date of publication of application: **11.11.2015**
(21) Application number: 15166487.7
(22) Date of filing: 05.05.2015
(51) Int. Cl.: B60K 7/00, B60K 17/04

(54) **MOTORIZED WHEEL**

(30) Priority: 05.05.2014 IT VR20140122
(71) Applicant: Movimotor S.r.l., 36078 Valdagno (VI) (IT)
(72) Inventor: Bertoldi, Devid, 36078 Valdagno (Vicenza) (IT)
(74) Representative: Feltrinelli, Secondo Andrea

(57) **Abstract**

A motorised wheel, comprising at least one bracket (2), able to be fixed to the frame of a vehicle, to which a support (6) is fixedly connected, an electric motor (8) associated with the support (6) and having an output shaft (14), at least one speed reduction stage (18) connected to the output shaft (14) and housed in a respective box (20), at least one wheel body (24) connected to the reduction stage (18), the wheel body (24) comprising a peripheral portion (26) for rolling on the ground and a front portion (28) for coupling with the reduction stage (18), a first rolling bearing (30) being arranged between the peripheral portion (26) and the support (6). The wheel comprises a second rolling bearing (32) arranged between the front portion (28) and the box (20) of the reduction stage (18). The front portion (28) of the wheel body (24) is connected to the reduction stage (18) through a flanged element (54) connected to the front portion (28) itself through front screws (56).

## Description

### TECHNICAL FIELD OF THE INVENTION

The present invention concerns a motorised wheel.

More specifically, the present invention concerns a motorised wheel for self-propelled vehicles, and the like.

### STATE OF THE ART

In various industrial sectors vehicles are used, having widely varying functions, which comprise motorised wheels that make them self-propelled.

For example, such motorised wheels are mounted in self-propelled industrial trucks, floor-cleaning machines, and the like, just to name a few.

A motorised wheel of this type usually comprises a bracket, able to be fixed to the frame of the vehicle, to which a support is fixedly connected.

The support has an electric motor, for example of the direct current type or even another type, associated with it.

The wheel also comprises a speed reduction stage connected to the output shaft of the electric motor.

In turn, the output wheel of the reduction stage is connected to the actual wheel body, which normally comprises a peripheral portion for rolling on the ground, coated with suitable material, for example rubber or similar; the wheel body is also coupled with the reduction stage, i.e. to the toothed output wheel thereof.

Mainly for reasons of reducing the axial bulk of the motorised wheel, the peripheral portion of the wheel body at least partially circumscribes the support of the electric motor, which is thus partially slotted inside the wheel body itself.

A rolling bearing is normally arranged between the inner surface of the peripheral portion of the wheel body and the outer surface of the support of the motor.

This solution allows the axial bulk of the motorised wheel to be reduced to the minimum, but it has been observed in practice that, in applications in which the vehicle has large bulk and/or heavy weight, it does not provide the necessary guarantees of reliability and safety.

Indeed, the only bearing present often undergoes extreme stress, and therefore it has a shorter lifetime than foreseen, and for this reason requires frequent maintenance interventions.

As well as this, in known solutions the complete dismounting of the motorised wheel, for example in order to be able to access the bearing of the wheel body or to carry out other interventions, is very laborious, since it requires the removal of different components before being able to extract the actual wheel body.

### PURPOSES OF THE INVENTION

The technical task of the present invention is to improve the state of the art.

In such a technical task, a purpose of the present invention is to provide a motorised wheel that allows greater loads to be supported with respect to known wheels.

Another purpose of the present invention is to provide a motorised wheel that is safer and more reliable with respect to known wheels.

Yet another purpose of the present invention is to make a motorised wheel that makes maintenance interventions simpler and easier.

This task and these purposes are accomplished by the motorised wheel according to the attached claim 1.

The motorised wheel according to the invention comprises a bracket, able to be fixed to the frame of a vehicle, to which a support defining the rear portion of the wheel is fixedly connected.

The motorised wheel also comprises an electric motor, associated with the aforementioned support and having an output shaft.

The wheel also comprises at least one reduction stage connected to said output shaft of the motor, and a wheel body connected to the reduction stage.

The wheel body comprises, in greater detail, a peripheral portion for rolling on the ground, and a front portion, opposite the aforementioned rear portion, for coupling with the aforementioned reduction stage.

There are also a first rolling bearing, arranged between the peripheral portion of the wheel body and the support, and a second rolling bearing, arranged between the front portion of the wheel body and the box that contains the reduction stage. According to an aspect of the invention, the front portion of the wheel body is connected to the reduction stage through a flanged element connected to said front portion through front screws. The dependent claims refer to preferred and advantageous embodiments of the invention.

### BRIEF DESCRIPTION OF THE DRAWINGS.

The characteristics of the invention will become clearer to those skilled in the art from the following description and from the attached tables of drawings, given as a non-limiting example, in which:
figure 1 is an axonometric view of the motorised wheel according to the present invention;
figure 2 is a front view of the wheel;

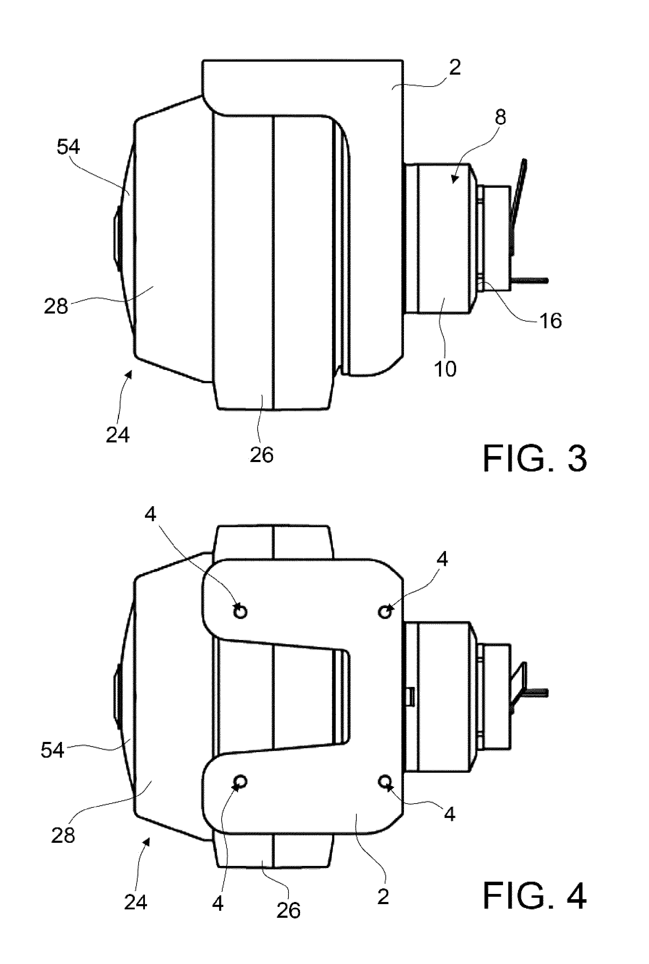

figure 3 is a side view of the wheel;
figure 4 is another plan view of the wheel;

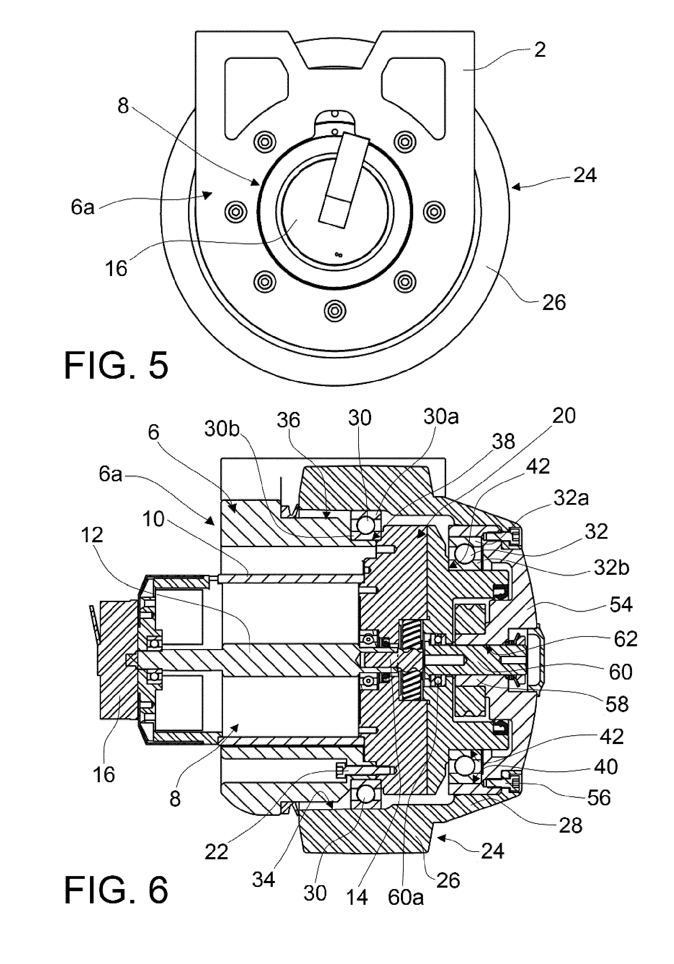

figure 5 is a rear view of the wheel;
figure 6 is a section of the wheel carried out according to the plane VI-VI of figure 2;
figure 7 is a section of the wheel carried out according to the plane VII-VII of figure 2;

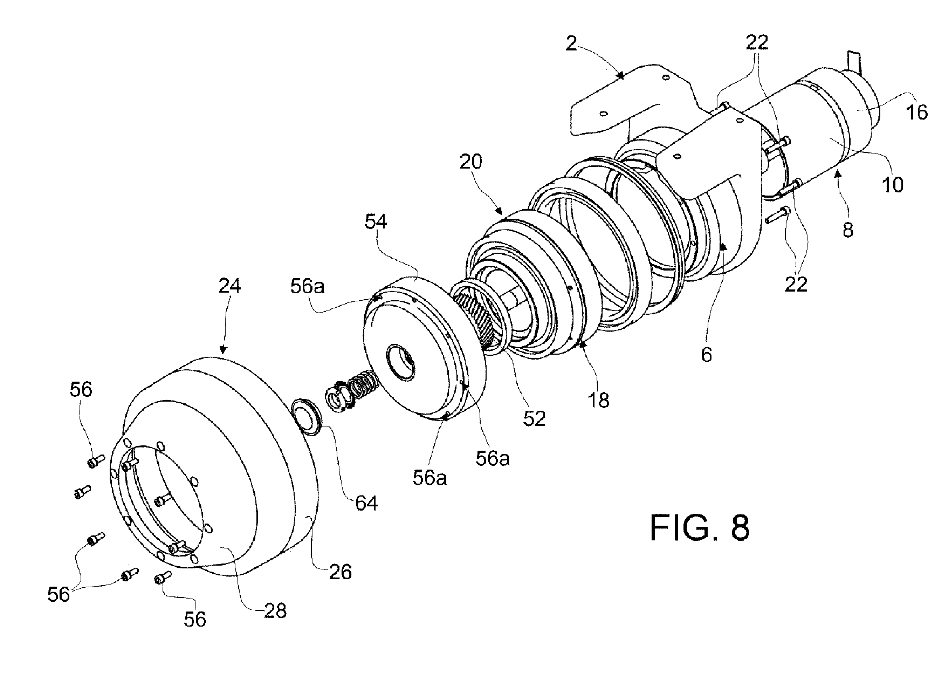

figure 8 is an exploded axonometric view of the wheel;
figure 9 is a front view of another embodiment of the wheel according to the invention;
figure 10 is a section of the wheel carried out according to the plane X-X of figure 9;
figure 11 is a section of the wheel carried out according to the plane XI-XI of figure 10;
figure 12 is an exploded axonometric view of a detail of the wheel of figures 9-11;
figure 13 is a front view of another embodiment of the wheel according to the invention;
figure 14 is a section of the wheel carried out according to the plane XIV-XIV of figure 13;
figure 15 is a section of the wheel carried out according to the plane XV-XV of figure 14;
figure 16 is an exploded axonometric view of a detail of the wheel of figures 13-15;
figure 17 is an axonometric view of another embodiment of the wheel according to the invention;
figure 18 is a front view of the wheel of figure 17;
figure 19 is a side view of the wheel of figures 17,18;
figure 20 is a plan view of the wheel of figures 17-19;
figure 21 is a section of the wheel carried out according to the plane XXI-XXI of figure 18;
figure 22 is a section of the wheel carried out according to the plane XXII-XXII of figure 18;
figure 23 is an exploded axonometric view of the wheel of figures 17-22;
figure 24 is an axonometric view of another embodiment of the wheel according to the invention;
figure 25 is a front view of the wheel of figure 24;
figure 26 is an exploded axonometric view of the wheel of figures 24,25;
figure 27 is an exploded detailed view of some parts of the wheel of figures 24-26;
figure 28 is a section of the wheel carried out according to the plane XXVIII-XXVIII of figure 25;
figure 29 is a section of the wheel carried out according to the plane XIX-XIX of figure 25;
figure 30 is a rear view of the wheel of figures 24-29.

### EMBODIMENTS OF THE INVENTION.

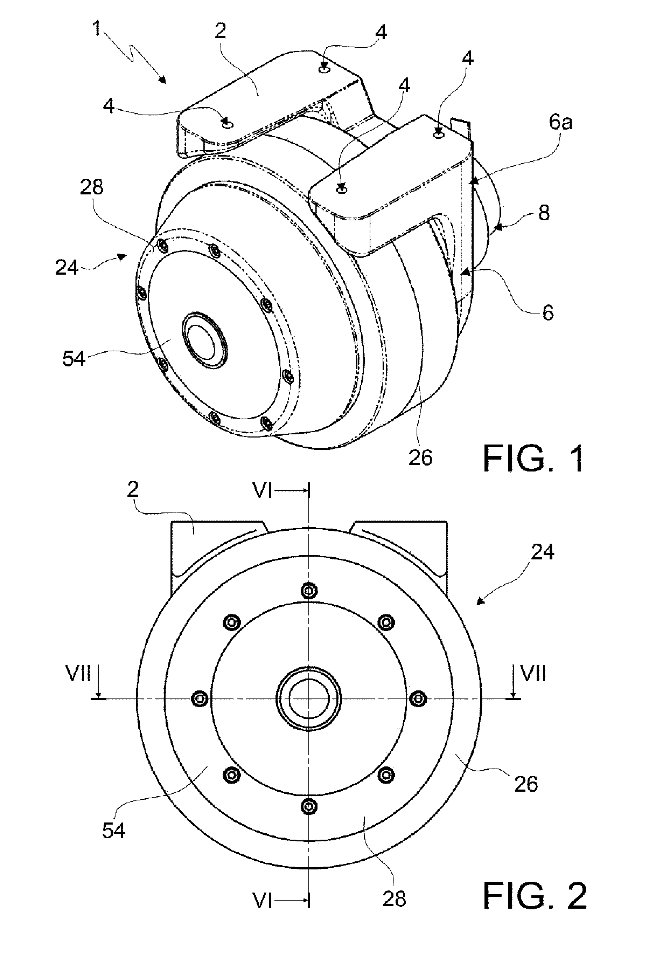

With reference to the attached figure 1, a motorised wheel according to the present invention is wholly indicated with 1.

The motorised wheel 1 according to the present invention can be installed on any electrically-driven self-propelled vehicle, for example an industrial truck, a floor-cleaning machine, or similar, without any particular limitation to the purposes of the present invention.

The wheel 1 comprises at least one bracket 2.

The bracket 2 can be fixed to the frame of a vehicle.

For example, the bracket 2 can be fixed to the vehicle through screws inserted in the holes 4, or through another type of connection means.

The bracket 2 is fixedly connected to a support 6.

The bracket 2 and the support 6 can be made in a single piece, or in separate pieces able to be connected together.

The support 6 defines the rear portion 6a of the wheel 1.

The wheel 1 also comprises an electric motor 8, associated with the support 6.

The support 6 has an essentially tubular configuration.

The electric motor 8 is thus housed inside the support 6.

For example, the electric motor 8 can be of the two-pole direct current type, or a direct current motor with a different number of poles, or else an electric motor of a different type, for example using alternating current.

The type of motor 8 foreseen in the motorised wheel 1 does not constitute a restriction for the purposes of the present invention.

Only for illustrating and not limiting purposes, the motor 8 of the motorised wheel 1 described hereafter is of the direct current type.

The motor 8 comprises a tubular casing 10, inside which a stator is foreseen.

The motor 8 also comprises an armature 12, rotatably supported inside the aforementioned stator.

The armature 12 is rigidly associated with an output shaft 14.

The motor 8 also comprises a rear closing cap 16.

The closing cap 16 can also be associated with a brake for the electric motor 8. The motorised wheel 1 also comprises a reduction stage, wholly indicated with 18. The reduction stage 18 is connected to the output shaft 14 of the electric motor 8. The reduction stage 18 is housed inside a respective box 20.

The box 20, for example consisting of two half-shells coupled together, is fixed to the support 6 with closing screws 22, and frontally closes the tubular casing 10 of the electric motor 8.

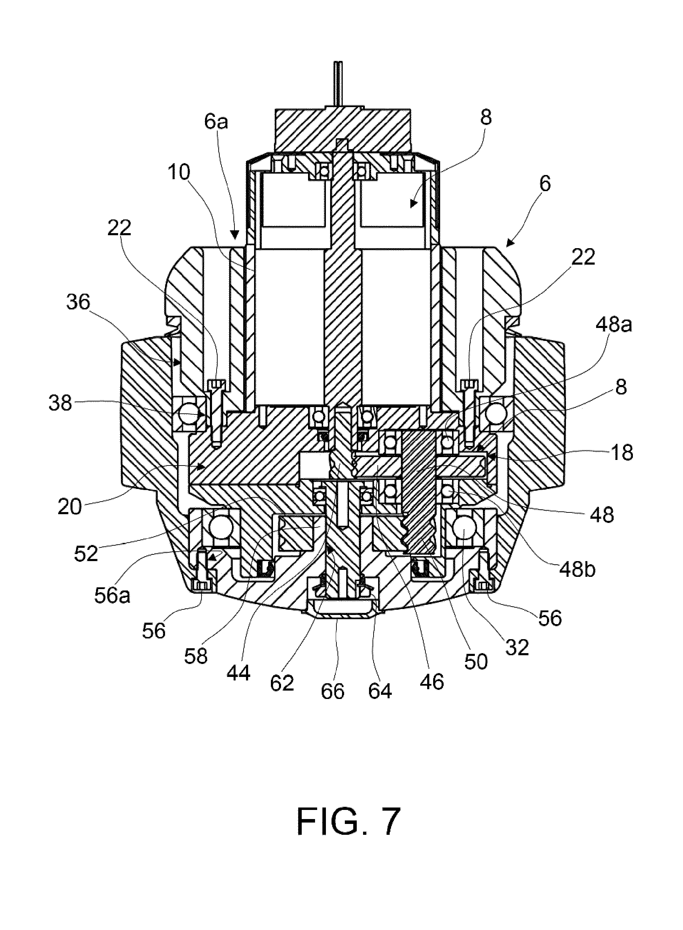

The closing screws 22 are accessible from the rear portion 6a of the support 6 (see for example figure 7).

The motorised wheel 1 comprises a wheel body 24.

The wheel body 24 is connected to the reduction stage 18, according to the ways described more clearly hereafter.

The wheel body 24 comprises, in greater detail, a peripheral portion 26 for rolling on the ground.

Moreover, the wheel body 24 comprises a front portion 28, for coupling with the reduction stage 18.

The front portion 28 is opposite the rear portion 6a of the wheel 1, in particular with reference to the rotation axis thereof.

The motorised wheel 1 comprises a first rolling bearing 30 of the wheel body 24. The first bearing 30 is arranged, in greater detail, between the peripheral portion 26 of the wheel body and the support 6.

According to an aspect of the present invention, the motorised wheel 1 comprises a second rolling bearing 32 of the wheel body 24.

According to a version of this embodiment, the second bearing 32 is of the ball type.

According to a further version of this embodiment the second bearing 32 can be of the roller type or another type, or it can consist of a bushing or other equivalent components.

The second bearing 32 is arranged between the front portion 28 of the wheel body 24 and the box 20 of the reduction stage 18.

Thanks to this solution, the load acting on the motorised wheel 1 is divided over two bearings 30,32 instead of on one, as happens in known wheels.

Moreover, the positioning of the second bearing 32 is particularly favourable as far as the possible maintenance operations on it or on other parts of the motorised wheel 1 are concerned, as will become clear hereafter.

The first bearing 30 is mounted with the respective outer ring 30a abutting on the inner surface 34 of the peripheral portion 26, and with the inner ring 30b abutting on the outer surface 36 of the support 6.

In greater detail, the inner ring 30b of the first bearing 30 is mounted in a peripheral seat 38 foreseen in the outer surface 36 in the support 6.

The second bearing 32, on the other hand, is mounted with the respective outer ring 32a abutting in an inner seat 40 of the front portion 28, whereas its inner ring 32b abuts on the box 20 of the reduction stage 18.

According to an aspect of the invention the inner ring 32b of the second bearing 32 abuts in a suitable shoulder 42 foreseen on the box 20 of the reduction stage 18. The shoulder 42 has a smaller diameter with respect to the peripheral seat 38 foreseen in the support 6.

The reduction stage 18, shown in particular in figure 7, comprises an entry wheel 44 fixed to the output shaft 14 of the electric motor 8.

The entry wheel 44 engages with a first intermediate wheel 46.

The first intermediate wheel 46 is fitted on a pin 48, which carries a second intermediate wheel 50.

The pin 48 has its axis parallel to that of the output shaft 14 of the motor 8.

The pin 48 is mounted on respective bearings 48a,48b, mounted inside the box 20. The second intermediate wheel 50 engages with an output wheel 52 of the reduction stage 18.

The output wheel is thus coaxial to the input shaft 14.

The wheels 44,46,50,52 can for example be of the cylindrical type with helical teeth, or even of another type.

The front portion 28 of the wheel body 24 comprises a flanged element 54 for connecting to the reduction stage 18.

More specifically, the flanged element 54 is directly coupled with the output wheel 52 of the reduction stage 18.

According to this solution, therefore, the inner housing seat 40 of the outer ring 32a of the second bearing 32 is foreseen in the flanged element 54.

The flanged element 54 is connected to the front portion 28 of the wheel body 24 through front screws 56.

The front screws 56 are engaged in respective threaded holes 56a of the flanged element 54.

The output wheel 52 of the reduction stage 18 is fitted onto an inner cylindrical appendage 58 of the flanged element 54.

The axial constraint of the wheel body 24 with respect to the reduction stage 18 is obtained through a central shaft 60, which has a first end rotatably supported inside the box 20 of the reduction stage 18 through a respective bearing 60a, and a second threaded end for connecting to the wheel body 24 itself.

In greater detail, the central shaft 60 is inserted inside a through channel 62 that passes through the cylindrical appendage 58.

The wheel body 24 is locked with respect to the central shaft 60 through a ring nut 64 screwed into its threaded end.

The through channel 62 is then closed by a front cover 66.

The constructive solution described allows important technical advantages to be obtained.

Firstly, the wheel body 24 is also supported at the front portion of the reduction stage 18, through the aforementioned second bearing 32, and therefore in an area that is sufficiently axially distanced from that in which the first bearing 30 is foreseen.

This makes it possible to obtain a stronger and more balanced object with respect to known ones, so as to be able to support even greater loads.

Therefore, the motorised wheel 1 becomes suitable even for applications on vehicles of greater size and/or undergoing greater stresses.

Another important advantage consists of the fact that the maintenance operations of the wheel are much simpler and more practical with respect to known wheels. Indeed, the wheel body 24 can be replaced by simply removing the front screws 56 that are clearly easy to access, since they are foreseen in the front portion 28 of the wheel 1 that is completely free.

If, however, further maintenance operations become necessary, the flanged element 54 can also be removed by simply acting on the ring nut 64.

This allows immediate access both to the first bearing 30 and to the second bearing 32, without having to remove any other part.

Another advantage of the present solution consists of the fact that the flanged element 54 can also be made from plastic, with a substantial reduction of costs. The wheel body 24, on the other hand, can be made from metal.

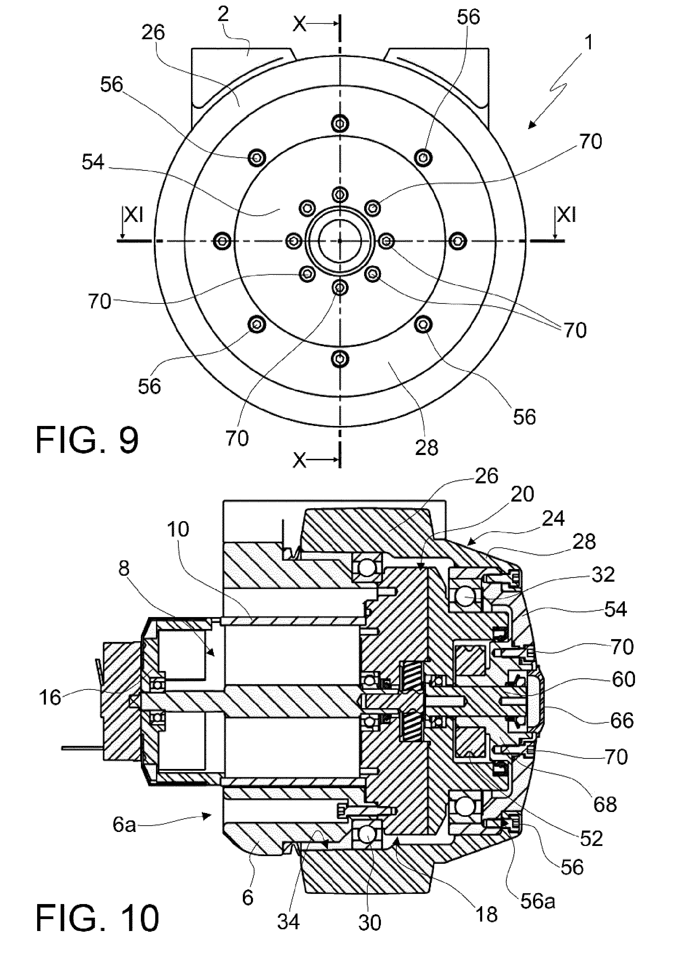

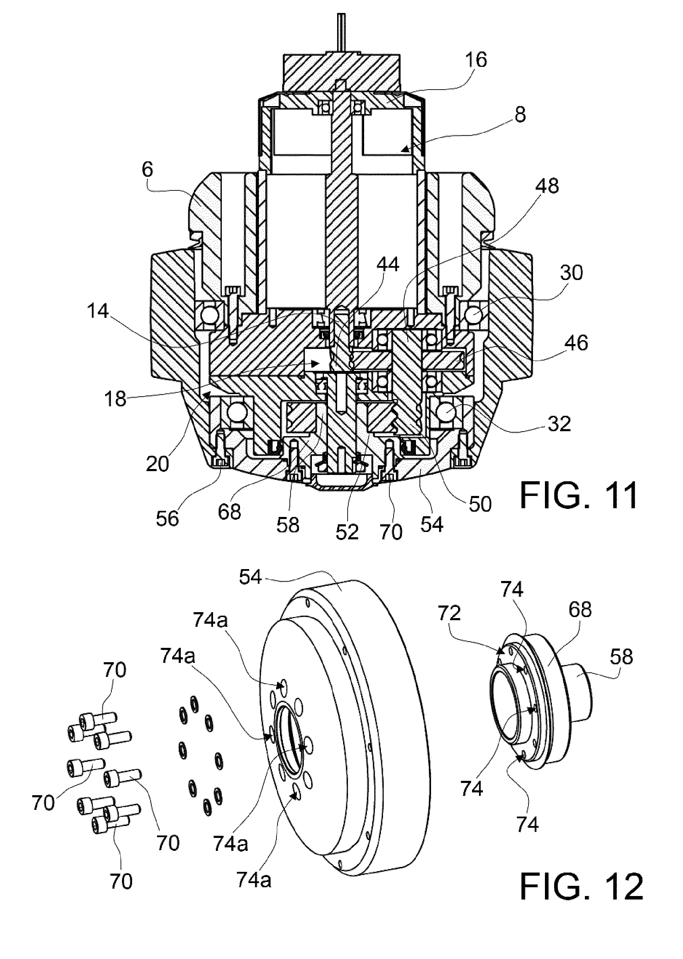

Figures 9-12 illustrate another embodiment of the motorised wheel 1 according to the present invention.

In the description of this embodiment, the parts corresponding to those of the previous embodiment are indicated with the same reference numeral.

This embodiment differs from the previous one essentially for the configuration of the wheel body 24.

In this embodiment, indeed, the flanged element 54 comprises a further coupling element 68 with the output wheel 52 of the reduction stage 18.

Basically, the flanged element 54 is thus divided into two parts.

The coupling element 68 is connected to the flanged element 54 through outer screws 70.

The outer screws 70 are accessible from the side of the outer face of the flanged element 54.

In greater detail, the coupling element 68 comprises an abutment surface 72 in which threaded holes 74 are foreseen for the outer screws 70.

Correspondingly, the flanged element 54 comprises through holes 74a for the insertion of the respective outer screws 70.

The cylindrical appendage 58 for coupling with the output wheel 52 of the reduction stage 18 is thus foreseen in the coupling element 68.

This solution can, in some cases, be advantageous both in terms of production, essentially because making two geometrically simple components can be more cost-effective than producing a single component but that is geometrically more complex.

Moreover, this solution can be advantageous in terms of the maintenance of the motorised wheel 1, since the user can access the second bearing 32 by simply separating the flanged element 54 from the coupling element 68, which on the other hand can remain associated with the output wheel 52.

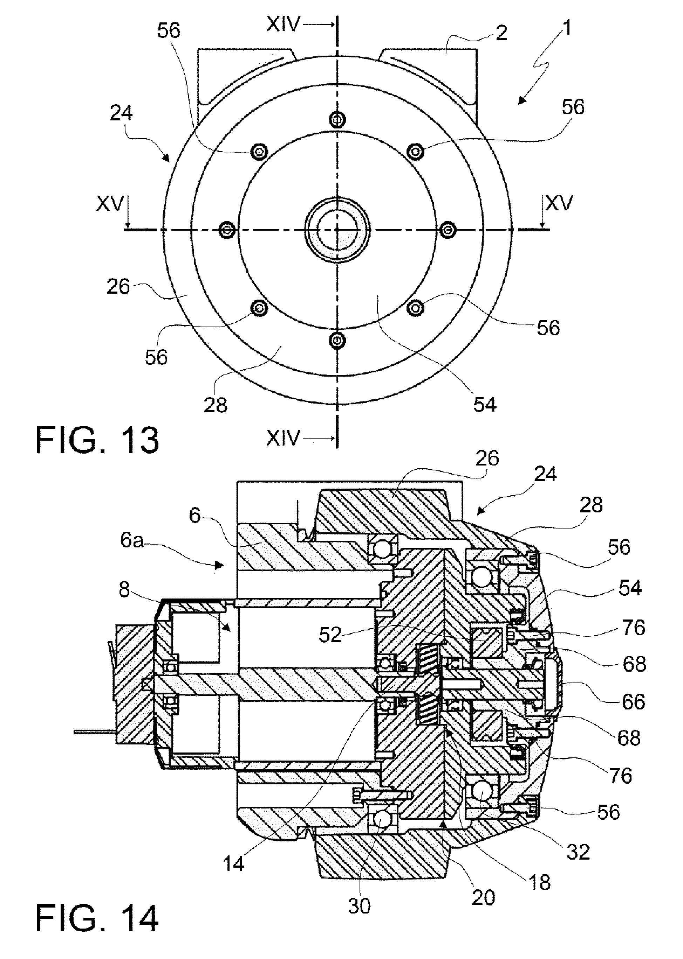

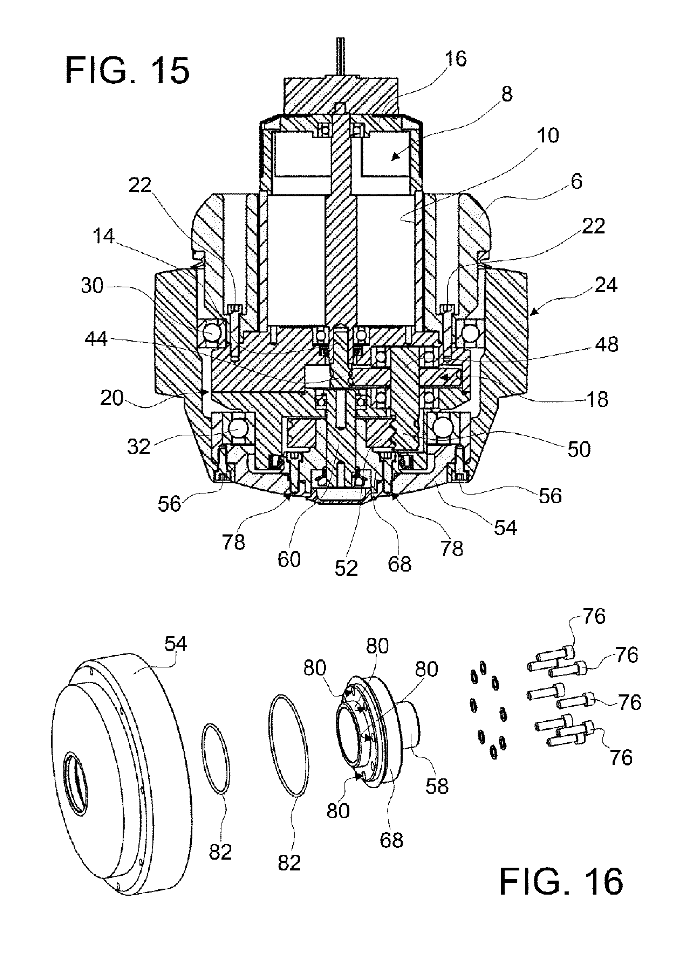

Another embodiment of the invention is illustrated in figures 13-16.

In the description of this embodiment, the parts corresponding to those of the previous embodiment are indicated with the same reference numeral.

This embodiment differs from the previous one - figures 9-12 - essentially for the way of fixing the flanged element 54 to the coupling element 68.

In this embodiment, indeed, the coupling element 68 is connected to the flanged element 54 through inner screws 76 not accessible from the outside.

The flanged element 54 thus has the outer surface in view that is completely smooth, i.e. without holes.

The flanged element 54, on the other hand, comprises blind threaded holes 78 foreseen in its inner face, in which the inner screws 76 can engage.

In the coupling element 68, consequently, corresponding through holes 80 are foreseen.

In order to prevent the lubricant of the reduction stage 18 from coming out through such through holes 80, gaskets of the O-ring type 82 are foreseen between the coupling element 68 and the flanged element 54.

This solution makes it possible to obtain a flanged element 54 that functionally constitutes a single body together with the coupling element 68, since the inner screws 76 are not accessible from the outside, but that in any case can be separated into two parts, once completely removed, in the case in which one of the two parts must be replaced, checked, etc..

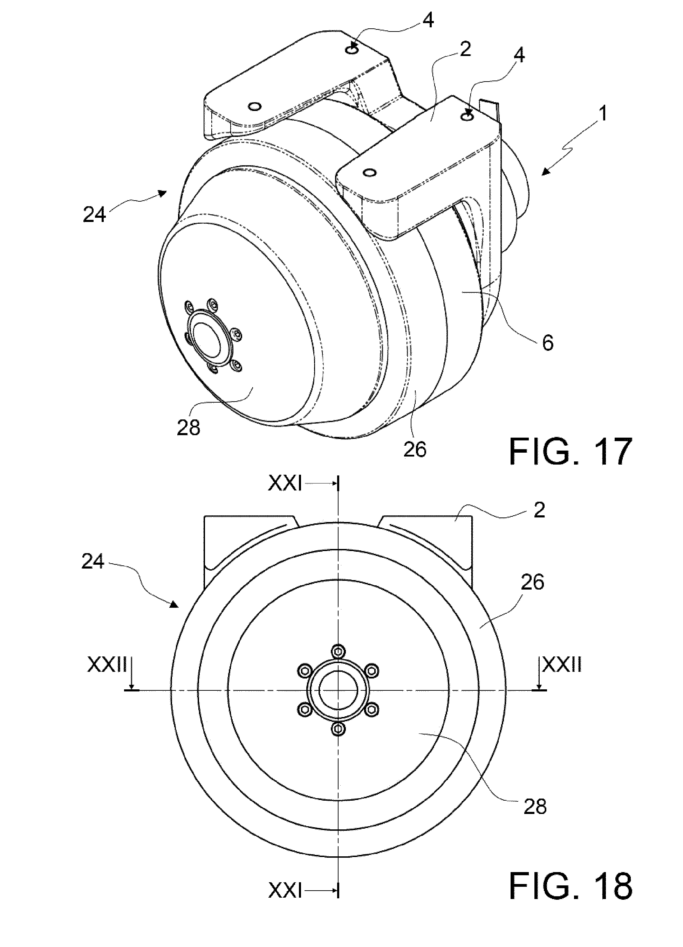

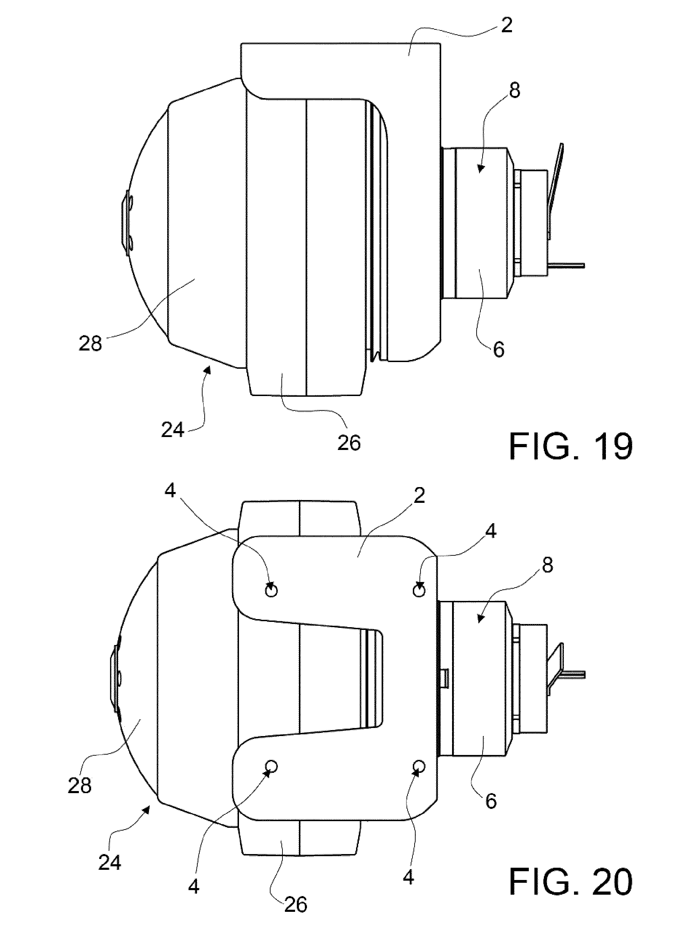

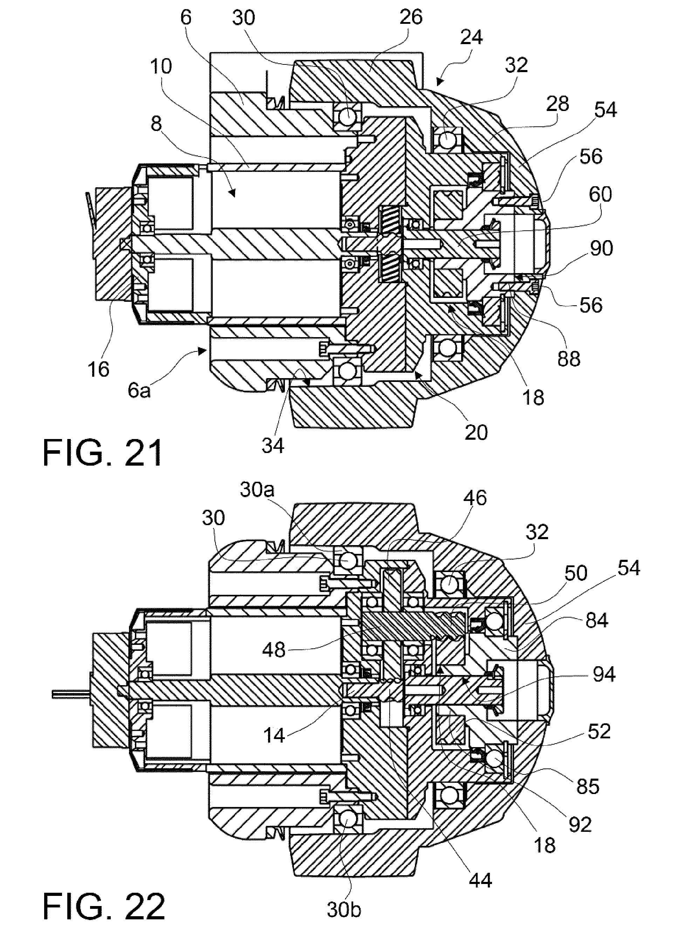

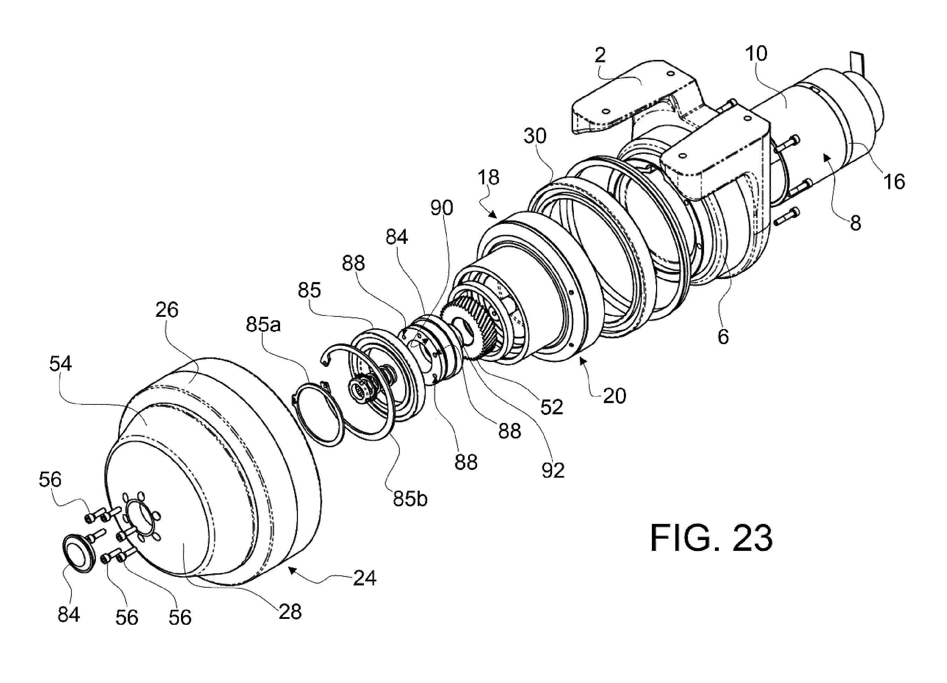

Yet another embodiment of the invention is illustrated in figures 17-23.

In the description of this embodiment, the parts corresponding to those of the previous embodiment are indicated with the same reference numeral.

This embodiment also differs from the previous ones essentially for the configuration of the wheel body 24.

In this embodiment, the wheel body 24 and the flanged element 54 are made in a single piece; in other words, they are not separable from one another.

In greater detail, the flanged element 54 is connected to a joint 84, in turn coupled with the output wheel 52 of the reduction stage 18.

The second bearing 32 is mounted directly between the inner surface 34 of the front portion 28 of the wheel body 24 and the box 20 of the reduction stage 18.

The flanged element 54 is connected to the joint 84 through front screws 56.

The front screws 56 are engaged in respective threaded holes 88 foreseen in the joint 84, in particular in its flat outer surface 90.

The joint 84 comprises, more specifically, an inner cylindrical extension 92, on which the output wheel 52 of the reduction stage 18 is fitted.

The joint 84 is supported inside the box 20 of the reduction stage 18 through a respective bearing 85.

The bearing 85 is held in position by elastic rings 85a,85b.

The joint 84 comprises a through channel 94 in which the central shaft 60 is inserted; a central cover 96 closes the access to the aforementioned through channel 94.

This solution is particularly advantageous firstly in terms of the production costs, since the wheel body 24 and the flanged element 54 are made in a single component.

The maintenance operations are also particularly simple, since the removal of the wheel body 24 through the front screws 56 allows both of the bearings 30,32 to be accessed very easily.

When needed, the joint 84 can be easily dismounted by simply removing the elastic rings 85a,85b and the bearing 85.

Also in functional terms, the present solution is particularly advantageous, since the bearings 30,32 are mounted directly in contact with the wheel body 24.

This results in greater rigidity of the wheel body 24 and therefore better behaviour under load, also in the presence of greater loads with respect to those normally involved in this type of application.

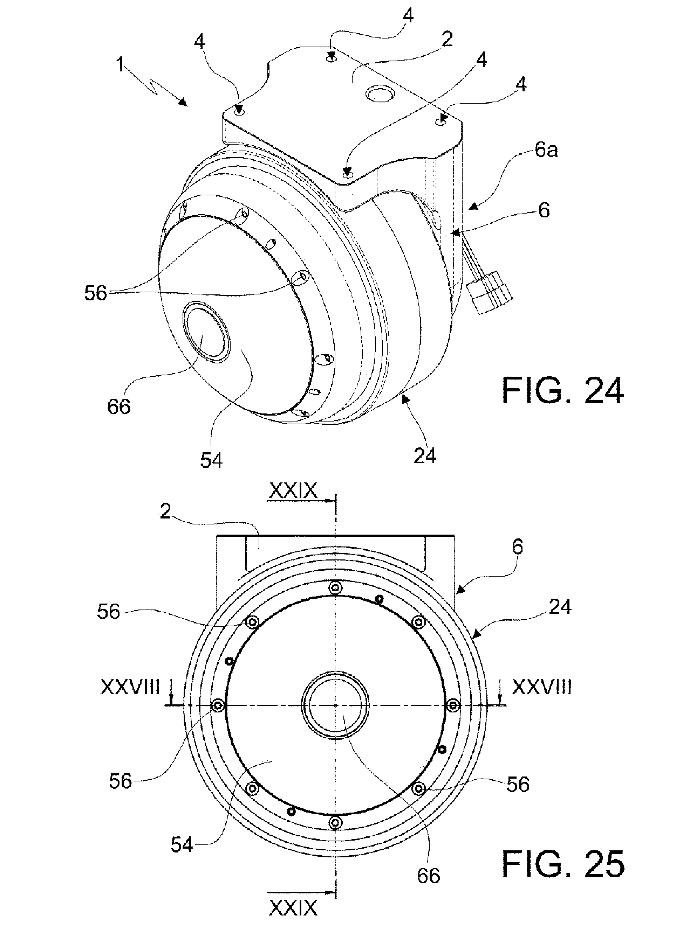

Yet another embodiment of the invention is illustrated in figures 24-30.

As can be seen, this embodiment is constructively similar to the previous embodiment illustrated in figures 13-16; the same reference numerals have been used to indicate the same parts of the wheel 1.

With respect to such an embodiment, the present version of the invention is more compact and has a more regular shape, since the bulk of the electric motor 8, including its brush-holder, in some versions of the invention can be substantially completely contained inside the support 6.

Moreover, the present version of the invention has a more regular geometry also in terms of the front portion 28 of the wheel body 24 and the flanged element 54, which are joined together so as to define a substantially semi-spherical shape.

In order to obtain this result, the second bearing 32 was reduced in size, whereas the size of the first bearing 30 was increased; this makes it possible to optimise the spaces inside the object, for example in terms of the size of the box 20 of the reduction stage 18.

The front screws 56 were also reduced in size and organised in more built-in seats, so as to be more protected.

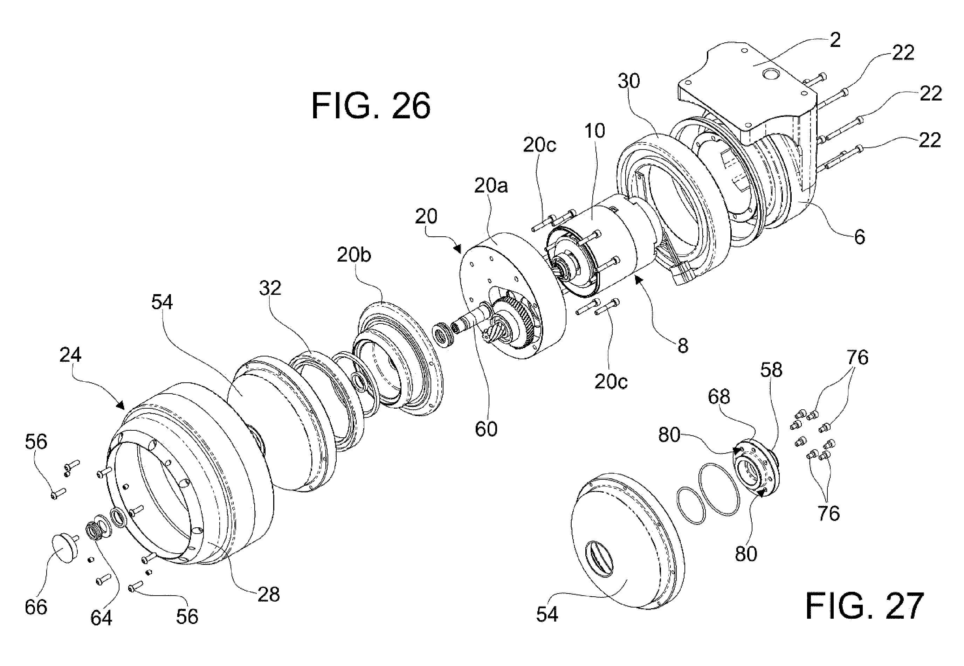

It should also be noted - see for example figure 26 - that the box 20 comprises a first half-shell 20a and a second half-shell 20b coupled together and connected through screws 20c, and is therefore simple to dismount in the case of maintenance interventions.

The size of the coupling element 68 and of the inner screws 76 has also been reduced, see for example figure 27.

Another modification with respect to the embodiments described previously concerns the closing screws 22 for fixing the box 20 to the support 6.

In this version, indeed, the closing screws 22 are longer and are engaged in respective through holes 22a of the support 6 positioned so that the closing screws 22 themselves pass in close proximity to the tubular casing 10 of the electric motor 8.

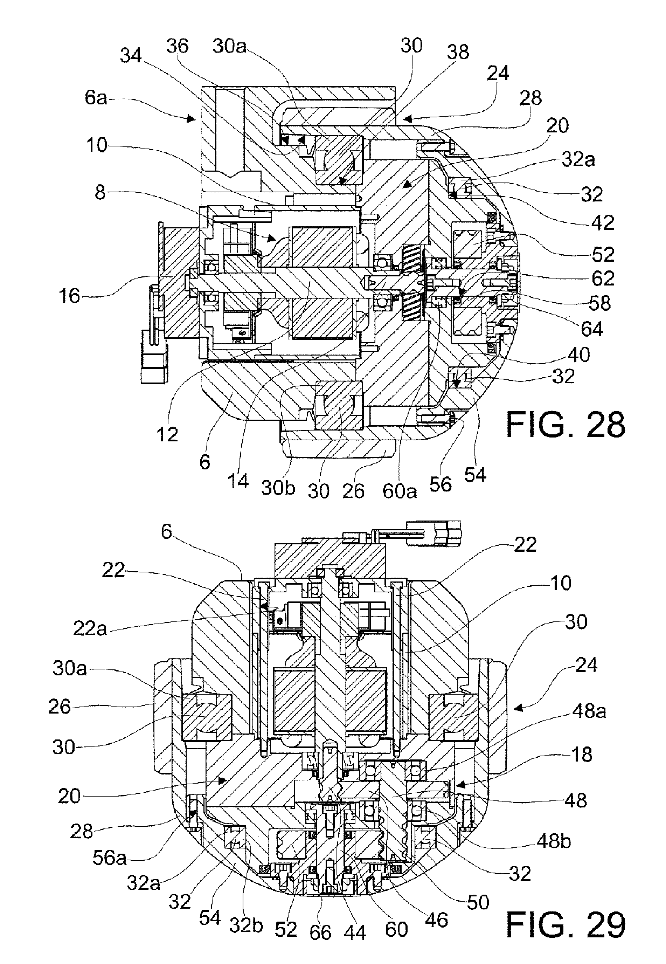

According to a version of the present embodiment of the invention, the closing screws 22 are comprised inside the radial bulk of the tubular casing 10 itself (see in particular figure 29).

Regarding this, it should be observed that the closing screws 22 do not interfere with the setting in rotation of the electric motor 8 itself.

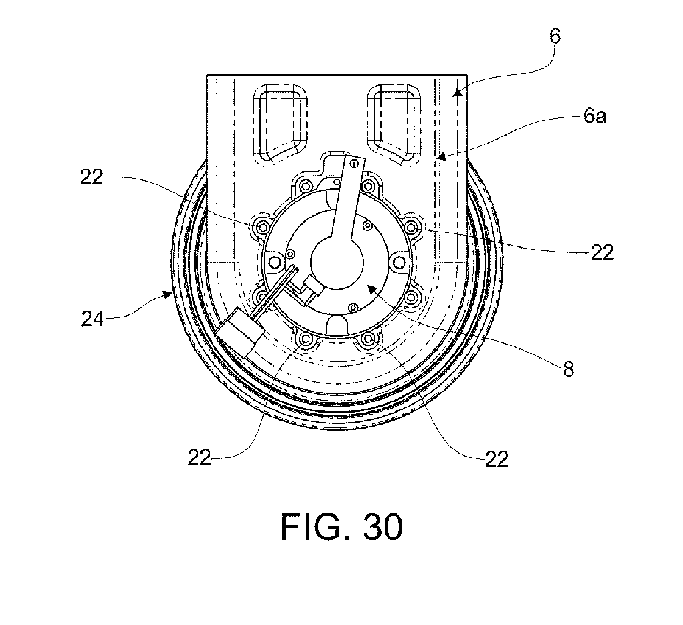

Moreover, the heads of the closing screws 22 are more easily accessible directly from the rear portion 6a of the support 6 (see figure 30).

As can be understood, in the case in which it is necessary to replace the first bearing 30, by acting on the closing screws 22, it is possible to separate the support 6 from the box 20, thus immediately freeing the first bearing 30.

In all of the embodiments described above, the second bearing 32 can be of the ball type or of the roller type, or another type, or it can consist of a bushing or other equivalent components.

It has thus been seen how the invention achieves the proposed purposes.

The present invention has been described according to preferred embodiments, but equivalent variants can be devised without departing from the scope of protection offered by the following claims.

## Claims

1. Motorized wheel (1), comprising at least a bracket (2), which can be fastened to the frame of a vehicle, with which a support (6), defining the rear portion (6a) of the wheel (1), is integral, an electric motor (8) associated with said support (6) and having an output shaft (14), at least a speed reduction stage (18) connected to said output shaft (14) and housed in a respective box (20), at least a wheel body (24) connected to said speed reduction stage (18), said wheel body (24) comprising a peripheral portion (26) for rolling on the ground and a front portion (28), opposite to said rear portion (6a), for coupling with said speed reduction stage (18), a first rolling bearing (30) being interposed between said peripheral portion (26) and said support (6), a second rolling bearing (32) being arranged between said front portion (28) and said box (20) of said speed reduction stage (18), **characterised in that** said front portion (28) is connected to said speed reduction stage (18) through a flanged element (54) connected to said front portion (28) through front screws (56).

2. Wheel according to claim 1, wherein said front screws (56) are engaged in respective threaded holes (56a;88) of said flanged element (54).

3. Wheel according to claim 1 or 2, wherein said first rolling bearing (30) is mounted with the outer ring (30a) abutting on the inner surface (34) of said peripheral portion (26), and with the inner ring (30b) abutting on the outer surface (36) of said support (6).

4. Wheel according to one of the previous claims, wherein said second rolling bearing (32) is mounted with the outer ring (32a) abutting in an inner seat (40) of said front portion (28), and with the inner ring (32b) abutting on the outer surface of said box (20).

5. Wheel according to the previous claim, wherein said inner seat (40) for said second rolling bearing (32) is provided in said flanged element (54).

6. Wheel according to one of the previous claims, wherein said flanged element (54) is directly coupled with the output wheel (52) of said speed reduction stage (18).

7. Wheel according to the previous claim, wherein said output wheel (52) is keyed on an inner cylindrical appendage (58) of said flanged element (54).

8. Wheel according to one of claims 1-5, wherein said flanged element (54) comprises a coupling element (68) with the output wheel (52) of said speed reduction stage (18).

9. Wheel according to claim 8, wherein said coupling element (68) is connected to said flanged element (54) by inner screws (76) which cannot be accessed from the outside.

10. Wheel according to claim 8, wherein said coupling element (68) is connected to said flanged element (54) by outer screws (70) which can be accessed from the outer face side of said flanged element (54).

11. Wheel according to claim 1, wherein said front portion (28) is connected to a joint (84) coupled in turn with the output wheel (52) of said speed reduction stage (18).

12. Wheel according to the previous claim, wherein said joint (84) comprises an inner cylindrical extension (92) on which said output wheel (52) is keyed, and a flat outer surface (90) for fastening said flanged element (54).

13. Wheel according to one of the previous claims, wherein said flanged element (54) is axially constrained, directly or by interposition of other elements, to said speed reduction stage (18) through a central shaft (60) having a first end rotatably supported within said box (20), and a second threaded end along which a ring nut (64) for locking said flanged element (54).

14. Wheel according to claim 1, wherein said wheel body (24) and said flanged element are made in a single piece.

15. Wheel according to one of claims 1-3, wherein said first rolling bearing (30) and or said second rolling bearing (32) can be of the ball type or of the roller type, or it can comprise a bushing or other equivalent components.
